# EUROPÄISCHE PATENTSCHRIFT

(11) **EP 0 535 394 B1**
(45) Veröffentlichungstag und Bekanntmachung des Hinweises auf die Patenterteilung: **03.02.1999**
(21) Anmeldenummer: 92115141.1
(22) Anmeldetag: 04.09.1992
(51) Int. Cl.: H01F 7/13, F16K 31/06

(54) **Magnetventil für tiefkalte verflüssigte Gase**
Electromagnetic valve for liquified gas at low temperatures
Clapet électromagnétique pour gaz liquifiés à basses températures

(30) Priorität: 04.10.1991 DE 4132931
(43) Veröffentlichungstag der Anmeldung: 07.04.1993
(73) Patentinhaber: MESSER GRIESHEIM GMBH, 60547 Frankfurt (DE)
(72) Erfinder: Tocha, Klaus, W-4018 Langenfeld (DE)

(56) Entgegenhaltungen:
- FR-A- 1 205 106
- US-A- 1 817 592
- US-A- 2 881 367
- US-A- 3 763 412
- US-A- 3 961 298

## Beschreibung

Die Erfindung betrifft ein Magnetventil nach dem Oberbegriff des Anspruches 1.

Bei der Flüssigwasserstoff-PKW-Versorgung (siehe beispielsweise - "gas aktuell", Firmenzeitschrift der Anmelderin, Nr. 36, 1989, Seiten 17 - 21, "Flüssigwasserstoff als Kraftstoff in Versuchsfahrzeugen") sind die für die Betankung und Motorversorgung erforderlichen Kryoventile als kleine Magnetventile (Strömungsquerschnitt ca. φ 5 mm, Durchströmmenge ca. 10 l/min) ausgebildet.

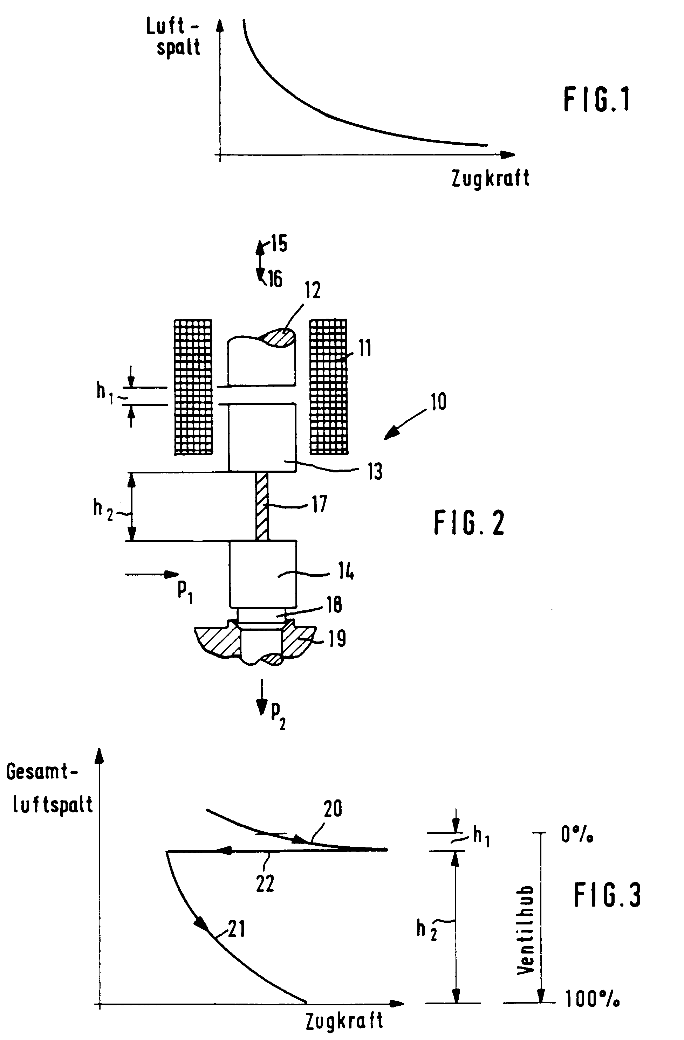

Bei den Magnetventilen ist die Magnetkraft, die ein Elektro-Hubmagnet auf seinen (beweglichen) Anker ausübt, überproportional von der Luftspaltlänge (Abstand Joch zu Anker) abhängig. Für einfache Hubmagnete ist ein typischer Kraftverlauf in Fig. 1 dargestellt.

Soll ein Hubmagnet die Betätigung eines Ventilverschlußorgans bewirken, so ergibt sich nach der Definition der Ventilkenngrößen an sich ein Zielkonflikt:

Beim Öffnen eines geschlossenen Ventils wird zu Beginn eine große Zugkraft benötigt, um die statische Druckdifferenz zu überwinden. Richtige Dimensionierung von Hub und Durchlaß vorausgesetzt, sind beim Vollhub die "schließenden" Strömungskräfte minimal.

Die Schließsituation bedeutet max. Luftspalt und min. Hub, die Vollöffnung min. Luftspalt und max. Hub. Der Kurvenzug "Hub über notwendiger Öffnungskraft" verläuft also genau gegenläufig zum Kraftverlauf des Hubmagneten.

Dieser an sich bei jedem Magnetventil vorhandene Zielkonflikt wirkt sich insbesondere aus bei Magnetventilen mit größerem Strömungsquerschnitt und großen Durchflußmengen, wie sie beispielsweise für eine Flüssigwasserstoff-Tankstelle benötigt werden.

Bei diesen Kryoventilen mit größeren Strömungsquerschnitten ist eine große Bauweise, insbesondere im Hinblick auf die Abkühlmasse, den Wärmeeintrag des Elektromagneten, die elektrische Anschlußleistung und die genannte Vakuumbox ungünstig.

In der US 3,763,412 ist eine Positionsvorrichtung offenbart, die aus einem Elektromagnet besteht, der eine Vielzahl von magnetischen Segmenten mit dazwischenliegenden Luftspalten aufweist. Dabei wird eine diskrete Positionierung des Tauchankers an beliebiger Stelle mittels einer Gegenkraft erreicht, welche mit zunehmender Verstellung zunimmt.

Ausgehend von diesem Stand der Technik ist es Aufgabe der Erfindung, ein Kryomagnetventil zu schaffen, das auch bei größeren Strömungsquerschnitten eine kleine Bauform aufweist und bei dem der oben genannte Zielkonflikt nicht auftritt.

Aus der US-A-3763412 ist eine lineare Positioniervorrichtung mit einem Solenoid offenbart, die diskrete Signale stellvertretend für aktuelle Positionen erzeugen soll. Die Positioniervorrichtung besteht aus einem Elektromagnet, der eine Vielzahl von magnetischen Segmenten mit dazwischenliegenden Luftspalten aufweist. Dabei wird über eine sich über die gesamte Länge der Luftspalte erstreckende und separate Windungen zuschaltenden Spule, sowie über eine der elektromagnetischen Kraft entgegenwirkende lineare Federkraft ein gleichförmiger Kraftverlauf erzielt, der sicherstellt, daß die mit dem Schließen des ersten Luftspalts zunehmende elektromagnetische Kraft, nicht zum Schließen der anderen Luftspalte führt.

Positioniervorrichtungen der selben Gattung sind in US-A-2881367, US-A-3961298, FR-A-1205106 und US-A-1817592 beschrieben.

Diese Aufgabe wird durch die im Anspruch 1 angegebenen Merkmale gelöst.

Vorteilhafte Weiterbildungen sind in den Unteransprüchen 2 bis 4 angegeben.

Bei der Erfindung wird nunmehr der Hubanker des Elektromagneten aufgeteilt. Dadurch wird die LuftspaltZugkraft-Kennlinie verändert und der ventilspezifisch wünschenswerten Öffnungskraft-Ventilhub-Kennlinie angenähert.Dies führt zu einem Hochleistungsmagnetventil für den Kryoeinsatz, welches räumlich betrachtet kaum größer als die bekannten kleinen Kryoventile für geringere Durchflußmengen ausgebildet werden kann. Dies hat den besonderen Vorteil, daß auf bei den kleinen Kryomagnetventilen bewährte Baukomponenten sowie vorliegende Betriebserfahrungen und elektrische sowie konstruktive Daten zurückgegriffen werden kann und die Fertigung leistungsfähiger (Öffnungsquerschnitt, Hub, Differenzdruck) Magnetventile bei kleiner Baugröße ermöglicht. Die Erfindung ist in den Zeichnungen näher dargestellt und wird im folgenden näher beschrieben. Dabei veranschaulicht
- Fig. 1: Kraftverlauf eines bekannten Hubmagneten
- Fig. 2: eine Prinzipdarstellung des erfindungsgemäßen Ventils
- Fig. 3: Kraftverlauf des erfindungsgemäßen Hubmagneten
- Fig. 4: ein bevorzugtes Ausführungsbeispiel eines Ventiles nach der Erfindung

Bei der Prinzipdarstellung in Fig. 2 weist der Elektromagnet 10 einen Spulenkörper 11, ein festes Joch 12 sowie einen Hubanker bestehend aus einem Oberanker 13 sowie einem Unteranker 14 auf. Ober- und Unteranker 13, 14 sind in einer in Fig. 2 nicht näher darstellten Führung in Doppelpfeilrichtung 15 - 16 definiert, axial beweglich angeordnet und über ein Seilzugelement 17 miteinander verbunden.

Im Unteranker 14 ist ein Verschlußstück 18 angeordnet, das bei nicht betätigtem Elektromagnet 10 dichtend auf dem Ventilsitz 19 anliegt. In Fig. 2 ist ferner mit h₁ der Luftspalt der ersten Hubstufe und mit h₂ der Luftspalt der zweiten Hubstufe bezeichnet. Ferner ist der statische Gasvordruck mit p₁ und der statische Gashinterdruck mit p₂ bezeichnet. Bei Erregung des Spulenkörpers 11 entsteht ein mehrstufiger Hub mit einer kleinen kraftintensiven ersten Hubstufe "h₁" und einer großen zweiten Hubstufe "h₂" mit geringer Krafterzeugung. Innerhalb der ersten Hubstufe wird die statische Druckdifferenz Ap = p₁ - p₂ überwunden. Mit Einsetzen der Strömung sinkt diese statische Druckdifferenz deutlich. Die einsetzende Strömungsdruckdifferenz ist gegen Ende der ersten Hubstufe so klein, daß die Zugkraft der zweiten Hubstufe zur Vollöffnung ausreicht. Der Kraftverlauf, abhängig vom Gesamtluftspalt (h₁ + h₂), ist jetzt der notwendigen Öffnungskraft angeglichen wie Fig. 3 veranschaulicht. In dieser ist der steigende Kraftverlauf in der ersten Hubstufe mit 20 und der ebenfalls aber geringer steigende Kraftverlauf in der zweiten Hubstufe mit 21 bezeichnet. Der waagrecht abnehmende Kraftverlauf, ab dessen Beginn Ober- und Unteranker 13, 14 aufeinanderliegen und magnetisch verbunden sind (Übergang von der ersten zur zweiten Hubstufe), ist mit 22 gekennzeichnet.

Durch die mehrteilige Ankerausführung wird somit eine Verschiebung des Kraftverlaufes erreicht und damit der eingangs genannte Zielkonflikt beseitigt.

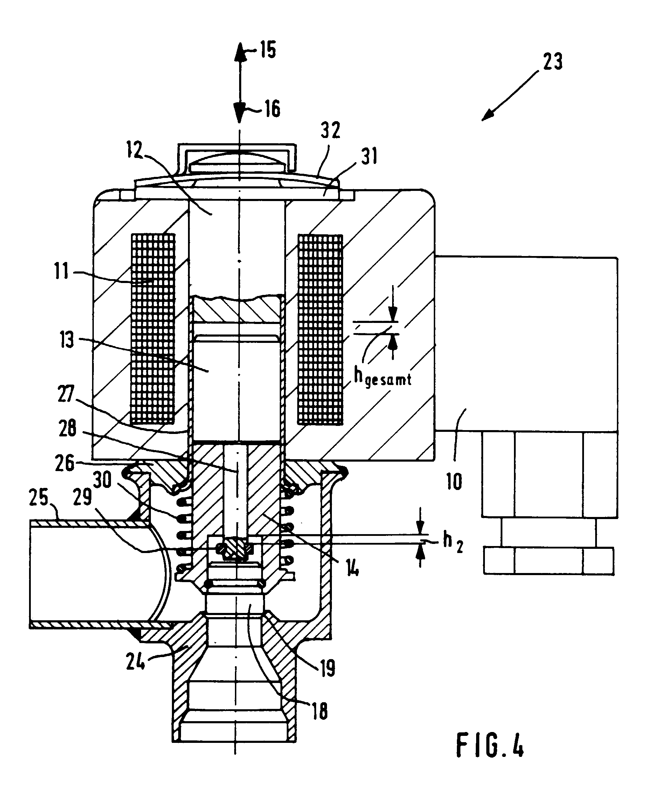

In Fig. 4 ist ein bevorzugtes Ausführungsbeispiel nach der Erfindung dargestellt, wobei das in seiner Gesamtheit mit 23 bezeichnete Ventil ein Ventilgehäuse 24 aufweist, an dem durch Schweißung ein Anschlußstück 25 sowie ein Oberteil 26 gasdicht (heliumdicht) befestigt sind. In der Führung 27 sind das Joch 12 sowie der Oberanker 13 sowie der Unteranker 14 axial beweglich angeordnet. Das Zugelement zwischen Ober- und Unteranker 13, 14 ist dabei als Zugstange 28 ausgebildet, wobei die definierte Axialbewegung h₂ zwischen Ober- und Unteranker 13, 14 durch eine Anschlag-/Mitnahmescheibe 29 begrenzt wird.

Im Unteranker 14 ist das Verschlußstück 18 befestigt, dem eine Druckfeder 30 zum Anpressen auf den Ventilsitz 19 zugeordnet ist.

Bei Erregung des Spulenkörpers 11 wird der Oberanker 13 zunächst in Pfeilrichtung 15 bewegt, bis die Anschlagscheibe 29 am Unteranker 14 anliegt. Der Oberanker 13 führt dann die erste kraftintensive Hubstufe durch (bis der Oberanker 13 am Joch 12 anliegt) und nimmt dabei den Unteranker 14 mit und hebt das Verschlußorgan 18 vom Ventilsitz 19. Danach erfolgt die zweite Hubstufe, bei der nur noch der Unteranker 14 mit dem Verschlußorgan 18 in Pfeilrichtung 15 bewegt wird.

Zum Schließen des Ventiles 23 wird der Elektromagnet 10 ausgeschaltet und durch die Druckfeder 30 der Unteranker 14 mit dem Verschlußorgan in Pfeilrichtung 16 gegen den Ventilsitz 19 gepreßt.

Das Ventil 23 ist von einer nicht näher dargestellten isolierenden Vakuumbox umgeben.

Im Oberteil 26 ist eine Führung 27 eingeschweißt, auf der der Spulenkörper 11 aufgesteckt ist, wobei dieser Spulenkörper gegen axiale Verschiebung durch Scheibe 31 und Befestigungsclip 32 gesichert ist.

## Patentansprüche

1. Magnetventil mit einem Hubanker, der aus mindestens einem Oberanker (13) und einem Unteranker (14) besteht, die miteinander verbunden und gegeneinander beweglich sind, und einer Spule (11),
dadurch gekennzeichnet,
daß der Unteranker (14) mit einem Verschlußorgan (18), dem eine Druckfeder (30) zugeordnet ist, verbunden ist und das Verschlußorgan (18) in einem von einem tiefkalten verflüssigten Gas durchstömten Ventilgehäuse (24) angeordnet ist und der Hubanker (13, 14) bei Erregung der Spule (11) in einer kleinen kraftintensiven ersten Hubstufe h1 das Verschlußorgan (18) von einem Ventilsitz (19) abhebt und in einer großen zweiten Hubstufe h2 mit geringerer Krafterzeugung das Verschlußorgan (18) weiter von dem Ventilsitz (19) entfernt, wodurch die Luftspalt-Zugkraft Kennlinie des Hubankers der Öffnungskraft-Ventilhub-Kennlinie des Magnetventils angenährt ist und zum Schließen des Ventils der Unteranker (14) mit dem Verschließorgan (18) durch die Druckfeder (30) gegen den Ventilsitz gepreßt wird.

2. Magnetventil nach Anspruch 1,
dadurch gekennzeichnet,
daß der Oberanker (13) und der Unteranker (14) in einer Führung (27) axial beweglich angeordnet und über ein Zugelement (17, 28) miteinander verbunden sind.

3. Magnetventil nach Anspruch 1 oder 2,
dadurch gekennzeichnet,
daß das Zugelement als Seil (17) ausgebildet ist.

4. Magnetventil nach Anspruch 1 oder 2,
dadurch gekennzeichnet,
daß das Zugelement als Zugstange (28) ausgebildet ist.

## Claims

1. Solenoid valve with an armature consisting of at least one upper armature (13) and one lower armature (14) which are connected to one another and are moveable relative to one another, and with a coil (11), characterized in that the lower armature (14) is connected to a closing member (18) which is assigned a compression spring (30), and the closing member (18) is arranged in a valve housing (24), through which a refrigerated condensed gas flows, and, when the coil (11) is energized, the armature (13, 14) lifts off the closing member (18) from a valve seat (19) in a small first stroke stage hl of intensive force and removes the closing member (18) further from the valve seat (19) in a large second stroke stage h2 in which less force is generated, with the result that the airgap/tensile-force characteristic of the armature is approximated to the opening-force/valve-stroke characteristic of the solenoid valve, and, in order to close the valve, the lower armature (14) together with the closing member (18) is pressed against the valve seat by means of the compression spring (30).

2. Solenoid valve according to Claim 1, characterized in that the upper armature (13) and lower armature (14) are arranged so as to be axially moveable in a guide (27) and are connected to one another via a tension element (17, 28).

3. Solenoid valve according to Claim 1 or 2, characterized in that the tension element is designed as a cable (17).

4. Solenoid valve according to Claim 1 or 2, characterized in that the tension element is designed as a tension rod (28).

## Revendications

1. Soupape électromagnétique avec un induit, se composant au moins d'un induit supérieur (13) et d'un induit inférieur (14), reliés entre eux et pouvant se déplacer l'un par rapport à l'autre et d'une bobine (11),
caractérisée en ce que
l'induit inférieur (14) est relié à l'organe de fermeture (18) auquel est associé un ressort de pression (30) et l'organe de fermeture (18) est disposé dans un boîtier de soupape (24) traversé par un gaz liquéfié à basse température et l'induit (13, 14) soulève l'organe de fermeture (18) d'un siège de soupape (19) dans un premier échelon de course (h₁), court, avec une force de grande intensité et continue de soulever l'organe de fermeture, du siège de soupape (19) dans un second échelon de course (h₂) de grande longueur mais avec une force de faible intensité, la courbe entrefer-force de traction de l'induit approchant la courbe force d'ouverture-course de soupape de la soupape magnétique et l'induit inférieur (14), avec l'organe de fermeture (18), est poussé par le ressort de pression (30) contre le siège de soupape pour fermer la soupape.

2. Soupape électromagnétique selon la revendication 1,
caractérisée en ce que
l'induit supérieur (13) et l'induit inférieur (14) coulissants dans un guide (27) sont reliés ensemble par un élément de traction (17, 28).

3. Soupape électromagnétique selon la revendication 1 ou 2,
caractérisée en ce que
l'élément de traction est réalisé sous la forme d'un câble (17).

4. Soupape électromagnétique selon la revendication 1 ou 2,
caractérisée en ce que
l'élément de traction est réalisé sous la forme d'une tige de traction (28).
